# EUROPEAN PATENT APPLICATION

(11) **EP 1 773 050 A2**
(43) Date of publication of application: **11.04.2007**
(21) Application number: 06254472.1
(22) Date of filing: 29.08.2006
(51) Int. Cl.: H04N 5/445

(54) **Method of displaying broadcast information and video display apparatus using the same**

(30) Priority: 30.08.2005 KR 20050080156
(71) Applicant: LG Electronics Inc., Youngdungpo-Gu Seoul (KR)
(72) Inventor: Lee, Kyung Jae, Buk-gu Daegu (KR)
(74) Representative: Bryn-Jacobsen, Caelia

(57) **Abstract**

A method of displaying broadcast information and a video display apparatus using the same are provided so that, in providing broadcast information via an electronic program guide, video information for a corresponding program is made available to a user in a thumbnail format. The method includes steps of receiving a broadcast program stream including electronic program guide (EPG) information; storing, in a storage medium, thumbnail information corresponding to a specific broadcast program of the received broadcast program stream; configuring a broadcast guide using the thumbnail information stored in the storage medium; and displaying the configured broadcast guide in response to a program guide key input.

## Description

The present invention relates to digital television, and more particularly, but not limited to a method of displaying broadcast information in a video display apparatus and to a video display apparatus using the same, by displaying a thumbnail corresponding to a program together with broadcast information generated according to an electronic program guide.

In broadcasting a digital television signal, additional data streams may be included with the video and audio data. The additional data may provide additional multimedia services such as programming information, internet information, and real-time information (e.g., stock market prices, exchange rates, and weather reports). That is, multimedia broadcasting integrates television programs and additional data using a multimedia format including video, audio, and various additional data streams to be selectively displayed on a television screen according to viewer preferences. Meanwhile, digital television enables bi-directional multimedia broadcasting in which there is a flow of information from viewer to broadcasting station as well as from broadcasting station to viewer, thereby enabling interactive television services where users may access an information service company to be provided with user-specific information. Digital television services may combine interactive television and multimedia broadcasting concepts.

A general digital television typically includes such elements as a user input device, a tuner for receiving a broadcast signal comprising audio and video data streams as well as the additional data (service information), a decoder for decoding audio/video information, an audio/video processor for processing audio and video data, a controller for controlling overall system operation, and a display for displaying on-screen display (OSD) data generated under control of the controller. In addition, a data separator, i.e., a processor or controller, is provided for separating channel information from the additional data (service information), and the separated channel information is stored in a database. A demultiplexer separates the audio/video information and the service information from the received broadcast signal, with the audio/video information being output to the audio/video processor and the service information being output to the data separator. Service information may include a program association table (PAT) comprising information for a plurality of programs, a time date table/time offset table (TDT/TOT) comprising time information for each program, and an event information table (EIT) comprising information for generating an electronic program guide (EPG) made up of program-specific information, i.e., titles, synopses, broadcast ratings, start/end times, running times, and the like arranged according to broadcasting time and broadcasting station. The data processor separates EIT information from the service information and then stores the EIT information in the database according to a preset format, namely, an EPG format to be displayed as OSD data on a screen of the display.

According to a contemporary digital television receiver, however, the program-specific information of the electronic program guide, i.e., EPG information, is represented as text only, which encumbers user recognition of the program information. For example, infrequently viewed programs may be difficult to recognize based on program title alone. In addition, the long titles of some programs often require truncation for display in limited areas of an EPG screen, which inhibits recollection of the full title.

The present invention is set out in the independent claims. Some optional features are set out in the claims dependent thereto.

In one aspect there is a method of displaying broadcast information and a video display apparatus using the same that substantially obviates one or more problems due to limitations and disadvantages of the prior art.

In another aspect there is a method of displaying broadcast information and a video display apparatus using the same, by which, in providing broadcast information via an electronic program guide, video information for a corresponding program is made available to a user in a thumbnail format.

In a further aspect there is a method of displaying broadcast information and a video display apparatus using the same, which facilitates user recognition of broadcast information.

In another aspect there is a method of displaying broadcast information and a video display apparatus using the same, which provides a user with program information of a broadcast guide through graphics (image) information as well as characters (text).

In yet another aspect there is a method of displaying broadcast information and a video display apparatus using the same, which facilitates user recognition of programs even in cases where truncation of a program title is necessary.

In one aspect, there is provided a method of displaying broadcast information in a video display apparatus. The method comprises receiving a broadcast program stream including electronic program guide (EPG) information; storing, in a storage medium, thumbnail information corresponding to a specific broadcast program of the received broadcast program stream; configuring a broadcast guide using the thumbnail information stored in the storage medium; and displaying the configured broadcast guide in response to a program guide key input. The method may further comprise determining whether thumbnail information corresponding to the specific broadcast program is present in the received broadcast program stream; storing in the storage medium video information according to the thumbnail information presence determination, wherein at least one of a genre icon and a representative picture is attached to the specific broadcast program if it is determined that there is no corresponding thumbnail information included in the received broadcast program stream; determining whether program information, i.e., a title, corresponding to the specific program is stored in the storage medium; storing in the storage medium thumbnail information of a previously stored program as current EPG thumbnail information, if it is determined that corresponding program information is stored in the storage medium; and storing in the storage medium the genre icon and/or representative picture corresponding to the specific broadcast program, if it is determined that no corresponding program information is stored in the storage medium.

According to another aspect, there is provided a video display apparatus comprising a tuner for selecting a broadcast channel specified by a user; a video decoder for decoding a video signal input via the selected channel; an on-screen display (OSD) processor for processing broadcast information in an input broadcast signal to be displayed on a prescribed area of a display; a video processor for processing a video decoded by the video decoder and the broadcast information processed by the OSD processor to fit a format of the display; a storage medium for storing thumbnail information corresponding to a broadcast program title within electronic program guide information included in the broadcast information; and a controller for controlling the thumbnail information to be included together with a corresponding broadcast program in displaying a corresponding electronic program guide on the display via the OSD processor.

Therefore, user recognition of broadcast information is facilitated by providing the user with program information of a broadcast guide through graphics (image) information as well as characters (text). Even if truncation of a program title is necessary, for example, due to a display limitation, the corresponding program is identifiable through the display of graphics information to facilitate user recognition of the program and thus enable a more convenient use of the broadcast guide.

The accompanying drawings, which are included to provide a further understanding of the invention and are incorporated in and constitute a part of this application, illustrate embodiment(s) of the invention by way of example only and together with the description serve to explain the principle of the invention. In the drawings:

FIG. 1 is a block diagram of a video display apparatus according to the present invention;

FIG. 2 is a flowchart of a method of displaying broadcast information in a video display apparatus according to the present invention; and

FIG. 3 is a diagram of an EPG image displayed on a video display apparatus according to the present invention.

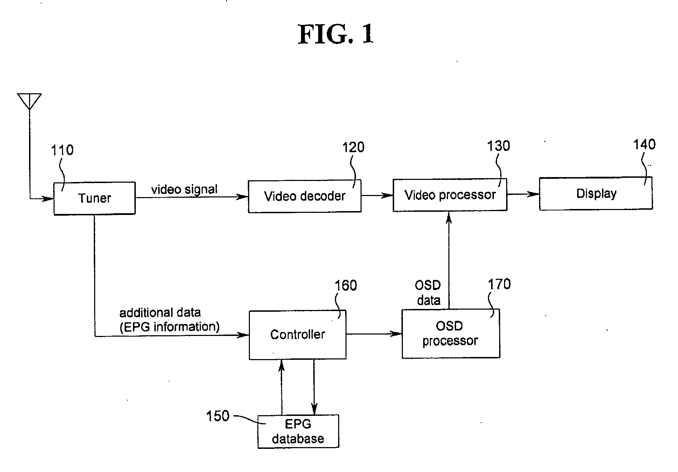

Referring to FIG. 1, a video display apparatus according to the present invention includes a tuner 110, a video decoder 120, a video processor 130, a display 140, an EPG database 150, a controller 160, and an on-screen display (OSD) processor 170. The tuner 110 selects a broadcast channel specified by a user, to output a tuned broadcast signal. The video decoder 120 decodes a video signal included in the broadcast signal input via the selected (tuned) channel. The video processor 130 video-processes the decoded video signal by mixing the video signal with digital broadcast information processed in accordance with the present invention, to output a formatted video signal to the display 140. Thought not specifically shown, the video signal path includes processing elements for receiving, decoding, and outputting audio data related to the incoming video data stream.

The digital broadcast information typically includes electronic program guide (EPG) information as part of the additional data transmitted with a video signal, and the EPG information is stored in the EPG database 150 according to broadcasting time and per broadcasting station. The EPG database 150 is a storage medium for storing thumbnail information (video and/or graphics information) corresponding to a broadcast program and may be a high-capacity storage medium such as a ROM device. The thumbnail information may specifically correspond to a broadcast program title displayed with the EPG information. For example, the EPG information may, for each broadcasting time and broadcasting station, include a broadcast program title, schematic text information according to broadcast program title, and representative thumbnail information according to broadcast program title. The representative thumbnail information may be a still image or may be moving pictures if the capacity of the EPG database 150 permits.

To facilitate user recognition of the broadcast program's genre (drama, news, sports, cartoons, etc.), the EPG database 150 may also separately store an icon representative of the genre of the broadcast program corresponding to the broadcast program title. That is, a plurality of genre icons may be pre-stored in the EPG database 150 by the manufacturer, to be assigned accordingly to each broadcast program of an electronic program guide and thus displayed in association with the broadcast program title. Genre icon assignment may be performed using, for example, viewer survey results.

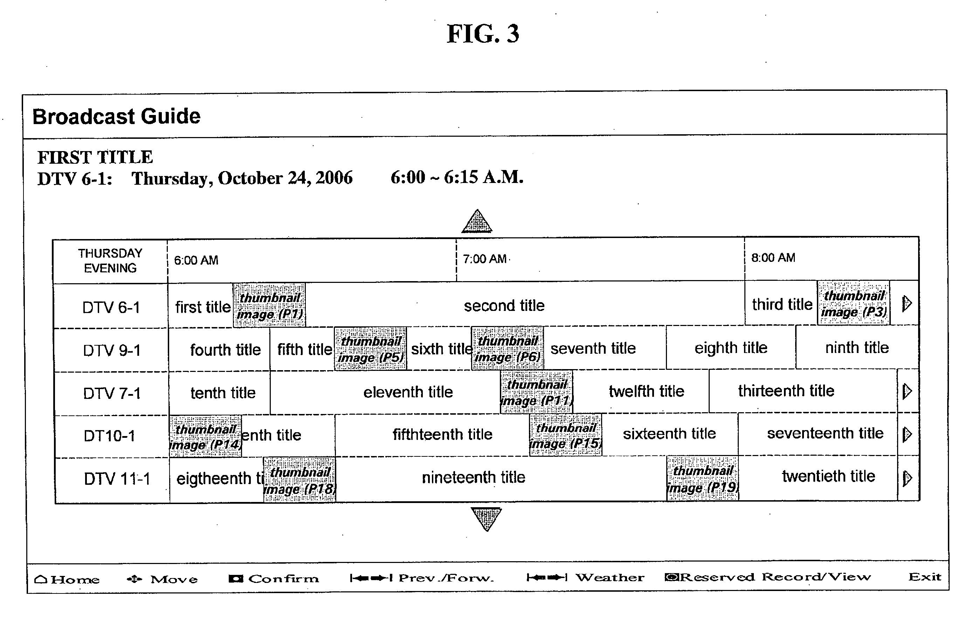

Accordingly, the EPG database 150 stores thumbnail information associated with the EPG information. The EPG information, included in the additional data transmitted with a video signal, is received by the controller 160 and stored in the EPG database 150. The thumbnail information can therefore be displayed together with on-screen display (OSD) data, such as tabulated text information, combined with the decoded video signal processed by the video processor 130. That is, the OSD processor 170 processes digital broadcast information to be displayed as OSD data on a prescribed screen area of the display 140 and outputs the processed information to the video processor 130. An example of the resultantly processed information is shown in FIG. 3, showing thumbnail information displayed simultaneously with EPG information.

The controller 160 controls, in addition to overall system operation, video information (e.g., a thumbnail) to be integrated into the display of an electronic program guide. For this, the controller 160 receives EPG information containing thumbnail information for at least one program and processes the received EPG information to be displayed via the OSD processor 170. The controller 160 periodically stores the EPG information in the EPG database 150, for example, whenever the EIT information is updated.

The controller 160 also determines whether the received stream of a broadcast program contains thumbnail information, and compensations can be made for broadcast programs where there is no thumbnail information. For example, if the broadcast program is one whose broadcast has been part of a previous guide, as may be the case for a regularly scheduled (e.g., daily or weekly) program, the controller 160 searches the EPG database 150 to determine whether program information of a specific program is already stored in the EPG database, so that corresponding thumbnail information may be obtained. Here, the program information may be a corresponding program title, or may be other information identifying a specific program, whose thumbnail information may have been stored as part of a previous guide. The controller 160 attaches (associates) the obtained thumbnail information to the broadcast program of the received stream and then stores the newly obtained information, i.e., the thumbnail and corresponding program title, in the EPG database 150. If the program is not one whose broadcast was part of a previous guide, the controller 160 uses at least one of a genre icon and a specific picture of a current broadcast program as a thumbnail, which is attached to the broadcast program of the received stream and then stores this information in the EPG database 150.

In any case, the stored representative graphics information, which is attached to the broadcast program of the received stream and specifically to its title information, is displayed in association with (e.g., adjacent to) the corresponding title information of the electronic program guide. Therefore, the controller 160 enables a program-specific video information service in providing an EPG service.

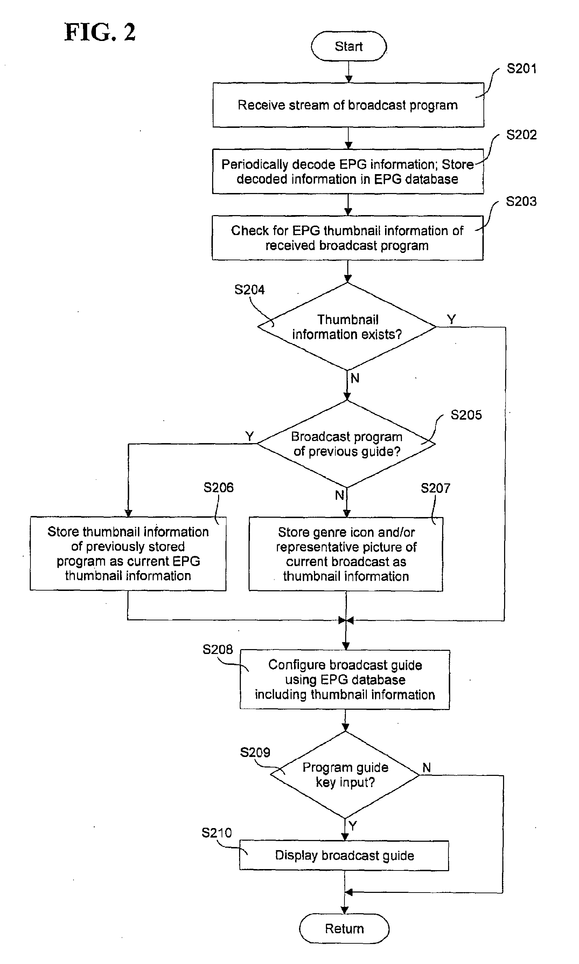

Referring to FIG. 2, illustrating a method of displaying broadcast information in a video display apparatus according to the present invention. First, a broadcast program is received as part of an incoming data stream including EPG information (S201). The controller 160 periodically decodes EPG information transmitted (and received) from a broadcasting station and stores the decoded information in the EPG database 150 (S202). Relevant thumbnail information may or may not be included in the currently received stream, so the controller 160 determines whether thumbnail information of a broadcast program is present (S203). If it is determined that no thumbnail information exists for a broadcast program (S204), the controller 160 determines whether the broadcast program was part of a previous broadcast guide (S205). If so, the thumbnail information of the previously stored program is used as current EPG thumbnail information corresponding to the broadcast program of the received stream, and this thumbnail information is stored in the EPG database 150 in association with the title information (S206); if not, a genre icon and/or a representative picture of a current broadcast are used as the thumbnail information, and a similar EPG database storage operation is performed to associate the genre icon/representative picture with the corresponding program title (S207). The representative picture may be obtained as a screenshot of the current broadcast, or as a series of such screen shots, where the current broadcast contains the necessary video information as part of the video stream. In this way, thumbnail information may be generated from video information.

If, on the other hand, it is determined that thumbnail information does exist for a broadcast program (S204), the controller 160 configures the broadcast guide accordingly. That is, with the EPG database 150 prepared as above, the controller 160 performs broadcast guide configuration using the stored EPG information including thumbnail information, that is, using an EPG database containing thumbnail information stored in correspondence to program titles of the broadcast guide, so that the configured broadcast guide may be selectively displayed as an electronic program guide (S208). By pressing a program guide key (S209), the user may initiate the display of a broadcast guide including thumbnail information juxtaposed to the title information of at least one program of an electronic program guide (S210).

FIG. 3 shows an exemplary OSD screen displayed according to the present invention. Here, an electronic program guide includes twenty sample program titles with available thumbnails (P1, P3, P5, P6, P11, P14, P15, P18, and P19) disposed adjacent the corresponding titles in accordance to the storage of thumbnail information in the EPG database. Below a broadcast guide display region indicating a current broadcast program, the guide includes a channel region including, say, six, channels and corresponding regions including respective lists of broadcast programs (titles) assigned per time according to channel. By selecting one or more programs of a specific broadcast program list, time period, or group of channels, information corresponding to the selection is displayed and thus provided to the user. An electronic program guide according to the present invention may be configured to include various formats, for example, a master program guide (MPG), which may include a master guide, additional guide data, channel information, and events information tables; a special program guide (SPG), which may include future events information, substitute channel information, and other additional guide tables; a description information parcel (DIP); and a private information parcel (PIP). An electronic program guide according to the present invention further includes thumbnail information corresponding to at least one program. Thus, an EPG screen image displayed on a video display apparatus according to the present invention includes a thumbnail image (still picture) or image set (moving pictures) as video information in a thumbnail format, to be displayed next to a corresponding broadcast program title.

By adopting the present invention, a user is provided with program information for a broadcast guide, which may be displayed as a combination of graphics and characters, enabling easy recognition of broadcast information. In addition, even if display limitations prevents the full display of a program title, representation of a broadcast guide can be facilitated by representing the program title as graphics, i.e., video information.

It will be apparent to those skilled in the art that various modifications can be made in the present invention without departing from the scope of the invention. Thus, it is intended that the present invention covers such modifications provided they come within the scope of the appended claims and their equivalents.

## Claims

1. A method of displaying broadcast information in a video display apparatus, the method comprising:
receiving a broadcast program stream including electronic program guide (EPG) information;
storing, in a storage medium, thumbnail information corresponding to a specific broadcast program of the received broadcast program stream;
configuring a broadcast guide using the thumbnail information stored in the storage medium; and
displaying the configured broadcast guide in response to a program guide key input.

2. The method of claim 1, wherein the thumbnail information is extracted from the EPG information; and/or wherein the thumbnail information is obtained based on program information of the received broadcast program stream.

3. The method of claim 1, wherein the thumbnail information is generated from video information contained in the received broadcast program stream, and/or wherein the thumbnail information is stored, in an EPG database, together with program information of the received broadcast program stream.

4. The method of claim 1, wherein the thumbnail information is stored, in a high-capacity storage device, separately from program information of the received broadcast program stream; and/or wherein the broadcast program stream includes a video stream and wherein the thumbnail information is obtained as at least one screenshot of the video stream; and/or wherein the thumbnail information is displayed simultaneously with the EPG information.

5. The method of claim 1, wherein the displayed broadcast guide is an electronic program guide including video information juxtaposed to title information of at least one broadcast program.

6. The method of claim 5, wherein the video information is stored in the storage medium in association with the title information of the at least one broadcast program.

7. The method of claim 1, further comprising:
determining whether thumbnail information corresponding to the specific broadcast program is included in the received broadcast program stream; and
storing in the storage medium video information according to said determination,
wherein at least one of a genre icon and a representative picture is attached to the specific broadcast program if it is determined that there is no corresponding thumbnail information included in the received broadcast program stream, and preferably wherein the at least one of a genre icon and a representative picture is stored in the storage medium in association with title information of the specific broadcast program.

8. The method of claim 1, further comprising:
periodically decoding the received EPG information; and
storing the decoded information in the storage medium; and/or wherein the thumbnail information is included in the EPG information.

9. The method of claim 1, further comprising:
determining whether program information corresponding to the specific program is stored in the storage medium;
storing in the storage medium thumbnail information of a previously stored program as current EPG thumbnail information, if it is determined that corresponding program information is stored in the storage medium; and
storing in the storage medium at least one of at least one of a genre icon and a representative picture corresponding to the specific broadcast program, if it is determined that no corresponding program information is stored in the storage medium.

10. The method of claim 9, wherein the at least one of a genre icon and a representative picture is stored in the storage medium in association with title information of the specific broadcast program.

11. The method of claim 9, said determining comprising:
searching the program information stored in the storage medium for title information corresponding to the specific broadcast program.

12. The method of claim 1, wherein the EPG information is formatted to included a master program guide, a special program guide, a description information parcel, a private information parcel, and thumbnail information corresponding to at least one broadcast program.

13. A video display apparatus, comprising:
a tuner for receiving a broadcast program stream including electronic program guide (EPG) information;
a storage medium for storing thumbnail information corresponding to a specific broadcast program of the received broadcast program stream;
a controller for configuring a broadcast guide using the thumbnail information stored in said storage medium; and
a display for displaying the configured broadcast guide in response to a program guide key input.

14. The video display apparatus of claim 13, wherein the thumbnail information is extracted from the EPG information; and/or wherein the thumbnail information is obtained based on program information of the received broadcast program stream.

15. The video display apparatus of claim 13, wherein the thumbnail information is generated from video information contained in the received broadcast program stream; and/or wherein said storage medium is an EPG database in which the thumbnail information is stored together with program information of the received broadcast program stream.

16. The video display apparatus of claim 13, wherein said storage medium is high-capacity storage device in which the thumbnail information is stored separately from program information of the received broadcast program stream; and/or wherein the broadcast program stream includes a video stream and wherein the thumbnail information is obtained as at least one screenshot of the video stream; and/or wherein the thumbnail information is displayed simultaneously with the EPG information.

17. The video display apparatus of claim 13, wherein the displayed broadcast guide is an electronic program guide including video information juxtaposed to title information of at least one broadcast program.

18. The video display apparatus of claim 17, wherein the video information is stored in said storage medium in association with the title information of the at least one broadcast program.

19. The video display apparatus of claim 13, wherein said controller determines whether thumbnail information corresponding to the specific broadcast program is present in the received broadcast program stream and stores in said storage medium video information according to the determined presence and wherein at least one of a genre icon and a representative picture is attached to the specific broadcast program if it is determined that there is no corresponding thumbnail information included in the received broadcast program stream, and preferably wherein the at least one of a genre icon and a representative picture is stored in said storage medium in association with title information of the specific broadcast program.

20. The video display apparatus of claim 13, wherein said controller periodically decodes the received EPG information and stores the decoded information in said storage medium.

21. The video display apparatus of claim 13, wherein said controller determines whether program information corresponding to the specific program is stored in said storage medium, stores in said storage medium thumbnail information of a previously stored program as current EPG thumbnail information if it is determined that corresponding program information is stored in said storage medium, and stores in said storage medium at least one of at least one of a genre icon and a representative picture corresponding to the specific broadcast program if it is determined that no corresponding program information is stored in said storage medium; and preferably wherein the at least one of a genre icon and a representative picture is stored in said storage medium in association with title information of the specific broadcast program.

22. A video display apparatus, comprising:
a tuner for selecting a broadcast channel specified by a user;
a video decoder for decoding a video signal input via the selected channel;
an on-screen display (OSD) processor for processing broadcast information in an input broadcast signal to be displayed on a prescribed area of a display;
a video processor for processing a video decoded by the video decoder and the broadcast information processed by the OSD processor to fit a format of the display;
an electronic program guide database for storing thumbnail information corresponding to a broadcast program title within electronic program guide information included in the broadcast information; and
a controller for controlling the thumbnail information to be included together with a corresponding broadcast program in displaying a corresponding electronic program guide on the display via the OSD processor.

23. The video display apparatus of claim 22, wherein the controller generates the thumbnail information by receiving a corresponding electronic program guide from the broadcast information, stores the generated thumbnail information in the electronic program guide database, and periodically stores the electronic program guide information in the electronic program guide database; and/or wherein the controller determines whether the thumbnail information exists in the broadcast program;
wherein, if the thumbnail information does not exist in the broadcast program and if the broadcast program has been previously stored as part of an earlier electronic program guide, the controller searches the electronic program guide database for a broadcast program title of the previously stored guide, obtains the thumbnail information corresponding to the searched broadcast program title, attaches the obtained thumbnail information to the searched broadcast program title, and stores the attached thumbnail information in the electronic program guide database; and
wherein, if the broadcast program has not been previously stored as part of an earlier electronic program guide, the controller uses at least one of a genre icon and a specific picture of a current broadcast program as a thumbnail, stores the thumbnail in the electronic program guide database, and controls a display of a current electronic program guide to dispose the thumbnail adjacent to a display of title information corresponding to the broadcast program.

24. The video display apparatus of claim 22, wherein the broadcast program title, schematic text information according to the broadcast program title, and representative thumbnail information according to the broadcast program title are included in the electronic program guide information per time and broadcasting station; and/or wherein information of the genre icon is pre-stored in the electronic program guide database according to a genre icon assignment performed by a manufacturer.
